# EUROPÄISCHE PATENTSCHRIFT

(11) **EP 2 810 550 B1**
(45) Veröffentlichungstag und Bekanntmachung des Hinweises auf die Patenterteilung: **09.03.2016**
(21) Anmeldenummer: 14158546.3
(22) Anmeldetag: 10.03.2014
(51) Int. Cl.: A01D 43/14, A01F 15/08

(54) **Erntemaschine zur Aufnahme von Erntegut**
Harvesting machine for receiving harvested goods
Moissonneuse pour la collecte de récoltes

(30) Priorität: 06.06.2013 DE 102013105821
(43) Veröffentlichungstag der Anmeldung: 10.12.2014
(73) Patentinhaber: CLAAS Selbstfahrende Erntemaschinen GmbH, 33428 Harsewinkel (DE)
(72) Erfinder: Laumeier, Ludger, 33397 Rietberg (DE); Große Wienker, Lukas, 59329 Wadersloh (DE)

(56) Entgegenhaltungen:
- EP-A1- 1 935 230
- DE-A1- 3 232 746
- DE-A1-102009 002 102
- US-A- 4 790 454
- US-A1- 2002 185 180

## Beschreibung

Die Erfindung betrifft eine Erntemaschine zur Aufnahme von Erntegut gemäß dem Oberbegriff des Anspruches 1.

Eine Erntemaschine zur Aufnahme von Erntegut der eingangs genannten Art ist aus der Offenlegungsschrift DE 10 2009 002 102 A1 bekannt. Darin ist ein selbstfahrender Feldhäcksler beschrieben, der ein als Tank ausgeführtes Behältnis zur Aufnahme eines Siliermittels aufweist, welches während des Ernteprozesses auf das im Feldhäcksler geförderten Erntegut aufgebracht wird. Der Einsatz von Siliermittel dient dazu, den Gärprozess zu fördern, den Futterwert der Silage zu verbessern sowie die Entstehung von Fäulnisherden im Erntegut zu vermeiden. Bei dem Siliermittel handelt es sich um eine Mischung, die sich aus einer oder mehreren Chemikalien sowie Wasser zusammensetzt. Das zum Einsatz kommende Siliermittel wird zu Beginn einer Erntefahrt angemischt und in den dafür vorgesehenen Tank am Feldhäcksler eingefüllt. Die erforderliche Einsatzmenge an Siliermittel muss dabei zuvor quantitativ abgeschätzt werden, was zu Restmengen im Behältnis führen kann, die im Allgemeinen nach kurzer Zeit nicht mehr verwendbar sind, da beispielsweise im Siliermittel enthaltene Milchsäurebakterien oder Enzyme nur eine begrenzte Lebensdauer aufweisen, wenn das nicht ordnungsgemäß gelagert wird. Das im Behältnis befindliche Siliermittel wird durch ein Zuführsystem, welches eine Dosiervorrichtung umfasst, gezielt auf das im Feldhäcksler geförderte Erntegut aufgebracht.

Als nachteilig ist weiterhin anzusehen, dass bei einem Einsatz von ULV-Siliermitteln (Ultra Low Volume-Siliermittel) separate Systeme zur Dosierung erforderlich sind, wenn diese neben einer verdünnten Siliermittelmischung oder als eine Beimischung zu in dem Tank befindlichen Wasser zum Einsatz kommen sollen. Dabei wird das ULV-Siliermittel in einem separaten Behältnis an der Erntemaschine angeordnet und an das separate Dosiersystem angeschlossen. Diese zusätzlich Anordnung geht mit einem erhöhten Aufwand zur Überwachung und Steuerung der Dosierung und einem erhöhten Bauraumbedarf an der Erntemaschine einher. Zudem ist der Einfluss von Sonneneinstrahlung sowie Abwärme eines Motors der Erntemaschine auf das in dem separaten Behältnis befindlichen ULV-Siliermittel groß, da eine übermäßige Erwärmung zum Absterben der Mikroorganismen führt.

Aufgabe der vorliegenden Erfindung ist es, eine Erntemaschine der eingangs genannten Art derart weiterzubilden, welche die zuvor genannten Nachteile vermeidet.

Dies wird erfindungsgemäß durch die kennzeichnenden Merkmale des Anspruches 1 erreicht.

Vorteilhafte Weiterbildungen der Erfindung sind Gegenstand der Unteransprüche.

Gemäß Anspruch 1 wird vorgeschlagen, dass das Behältnis zumindest eine weitere verschließbare Öffnung aufweist, durch welche mindestens ein mit Fluid befüllbares Zusatzbehältnis in das Behältnis einbringbar ist, dessen Inhalt mit dem im Behältnis befindlichen Fluid vermischbar ist. Das Einbringen des mindestens einen Zusatzbehältnisses in das Behältnis hat den Vorteil, dass das im Behältnis befindliche Fluid der Kühlung des in dem mindestens einen Zusatzbehältnis befindlichen Fluides dient. Die Temperatur des Fluides in dem mindestens einen Zusatzbehältnis wird weitgehend konstant gehalten, da die Erwärmung des das mindestens eine Zusatzbehältnis umgebenden Fluides durch Abwärme oder Sonneneinstrahlung in dem wesentlich größeren Behältnis langsamer erfolgt. Ein weiterer Vorteil resultiert aus der stofflichen Trennung der Fluide voneinander. So kann in dem Behältnis nur Wasser enthalten sein, während das mindestens eine Zusatzbehältnis beispielsweise Siliermittel in hoher Konzentration enthält, so genannten ULV-Siliermittel (Ultra Low Volume), und/oder einen sonstigen Zusatzstoff enthält. Nach Abschluss einer Erntefahrt lässt sich das mindestens eine Zusatzbehältnis entnehmen und, sofern in dem Zusatzbehältnis noch ein Fluid enthalten ist, einer fachgerechten Aufbewahrung zuführen, so dass es für einen nächsten Einsatz zur Verfügung steht. Gleiches gilt auch, wenn in dem Behältnis bereits eine Siliermittelmischung enthalten ist, der zusätzlich ein weiteres Siliermittel und/oder ein sonstiger Zusatzstoff zugeführt werden soll. Darüber hinaus besteht die Möglichkeit, das mindestens eine Zusatzbehältnis auch für das gleiche Fluid zu verwenden, welches in dem Behältnis enthalten ist, beispielsweise Wasser oder eine vorbereitete Siliermittelmischung. Ist der Einsatz des mindestens einen Zusatzbehältnisses nicht erforderlich, kann durch dessen Entnahme das Volumen des Behälters vergrößert werden.

Insbesondere kann das mindestens eine Zusatzbehältnis das Behältnis nach außen dichtend abschließen. Hierdurch können wechselseitige Kontaminationen der im Behältnis beziehungsweise Zusatzbehältnis enthaltenen Fluide vermieden werden.

Für eine Vermischung ist es vorteilhaft, wenn das Zusatzbehältnis an das mindestens eine Zuführsystem anschließbar ist. Hierdurch lässt sich eine bedarfsgerechte Mischung und Einbringung von Siliermittel in Abhängigkeit von Erntegutparametern, wie Gutfeuchte oder Inhaltsstoffen, erreichen.

Zur Einbringung in das Behältnis kann das Zusatzbehältnis mittels eines Gewindeabschnittes an dem Zusatzbehältnis sowie einem korrespondierenden Gewindeabschnitt an einem die Öffnung ausbildenden Stutzen am Behältnis mit diesem verschraubbar sein. Das Zusatzbehältnis kann somit die weitere Öffnung des Behältnisses anstelle eines Verschlussdeckels verschließen.

Zur Vereinfachung der Einbringbarkeit in das Behältnis kann das Zusatzbehältnis als ein hohlzylindrischer Körper ausgeführt sein, dessen Außenkontur zumindest an die Kontur der Öffnung angepasst ist. Darüber hinaus kann das Zusatzbehältnis zumindest teilweise an die äußere Kontur des aufnehmenden Behältnisses angepasste Abschnitte aufweisen, so dass es sich an der Wandung des Behältnisses abstützen kann. Für eine Arretierung an einer Wandung des Behältnisses kann an dem Zusatzbehältnis ein dornförmiger Vorsprung vorgesehen sein, der in eine korrespondierende Aussparung des Behältnisses eingreift. Insbesondere im untenseitigen Bereich des Zusatzbehältnisses kann ein solcher Vorsprung angeordnet sein.

Vorzugsweise kann das zumindest eine Zusatzbehältnis einen Füllstandsensor umfassen. Dieser Füllstandsensor kann auf Ultraschallbasis arbeiten und ist mit einer Steuereinheit der Erntemaschine verbunden, welche einer Bedienperson über den aktuellen Füllstand des mindestens einen Zusatzbehältnisses informiert. Zusätzlich kann ein entsprechender Füllstandsensor auch in dem Behältnis vorgesehen sein und mit der Steuereinheit zwecks Datentransfer in Verbindung stehen.

Alternativ kann im Inneren des Behältnisses unterhalb der zumindest einen Öffnung ausgehend von dieser eine Aufnahmevorrichtung angeordnet sein. Die Aufnahmevorrichtung kann einerseits der Halterung und Abstützung des Zusatzbehältnisses im Inneren des Behältnisses dienen sowie der Führung bei einem Einsetzen des Zusatzbehältnisses in das Behältnis.

Hierzu kann die Aufnahmevorrichtung im Inneren des Behältnisses an diesem angeformt sein. Das Anformen einer Aufnahmevorrichtung im Inneren des Behältnisses bei dessen Herstellung hängt von der Komplexität der Kontur des Behältnisses ab.

Alternativ kann die Aufnahmevorrichtung auch in das Behältnis einhängbar sein, so dass es bei nur bei Bedarf, das heißt, wenn das Zusatzbehältnis in das Behältnis eingesetzt wird, zum Einsatz kommen.

Dabei kann die Aufnahmevorrichtung das von dieser aufgenommenen Zusatzbehältnis zumindest abschnittsweise umschließen. Die Aufnahmevorrichtung bietet dem Zusatzbehältnis entsprechenden Halt im Inneren des Behältnisses und lässt gleichzeitig einen unmittelbaren Kontakt des im Behältnis befindlichen Fluides mit der Außenwandung des Zusatzbehältnisses zu, wodurch eine hinreichende Kühlung erzielbar ist.

Die vorliegende Erfindung wird nachstehend anhand von in den Zeichnungen dargestellten Ausführungsbeispielen näher erläutert.

Es zeigen:
- Fig. 1: eine landwirtschaftliche Erntemaschine in schematischer Seitenansicht;
- Fig. 2: eine Draufsicht auf ein als Tank ausgeführtes Behältnis;
- Fig. 3: eine Schnittansicht entlang der Linie A-A gemäß Fig. 2;
- Fig. 4: eine zweite Ausführungsform einer landwirtschaftlichen Erntemaschine in schematischer Seitenansicht.

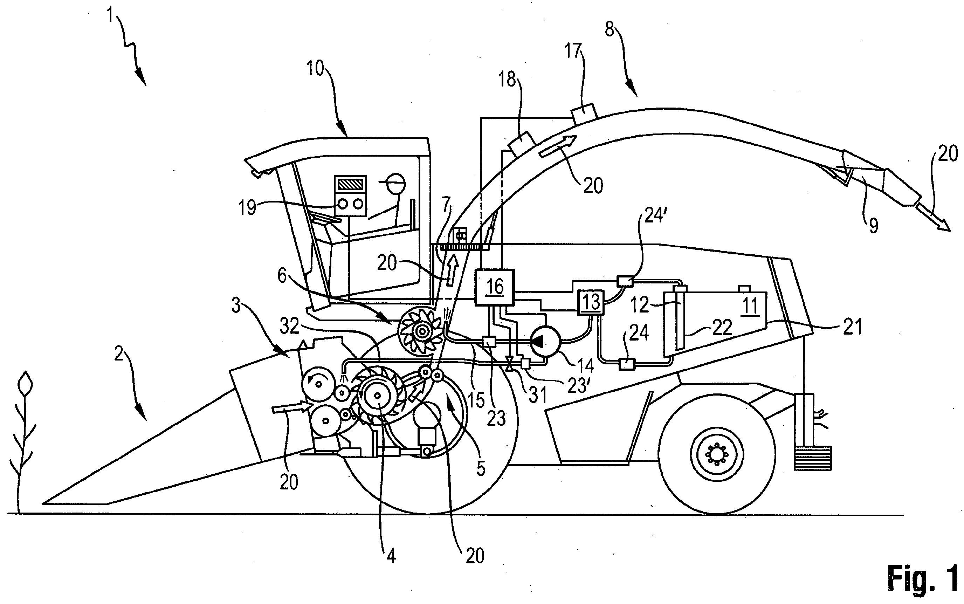

Die Fig. 1 zeigt beispielhaft eine erfindungsgemäße landwirtschaftliche Erntemaschine in Form eines selbstfahrenden Feldhäckslers 1, der zur Aufnahme von Erntegut eingerichtet ist. Es sei darauf hingewiesen, dass die Erfindung unter Erzielung vergleichbarer Effekte und Vorteile auch an anderen einen Erntegutstrom verarbeitenden Erntemaschinen umsetzbar ist, beispielsweise an Mähdreschern, Ladewagen oder Ballenpressen.

Der in der Fig. 1 gezeigte Feldhäcksler 1 ist zur Fahrt über ein mit einem Pflanzenbestand (angedeutet durch eine nicht näher bezeichnete Pflanze) bewachsenen Feld mit Vorder- und Hinterrädern ausgestattet und wird über einen Motor angetrieben. Auf für sich bekannte Weise schneidet der Feldhäcksler 1 bei der Erntefahrt mittels eines frontseitig an den Maschinenrahmen angebauten Erntevorsatzes 2 Pflanzenmaterial vom Feld ab und führt das so gewonnene Erntegut 20 (Förderweg durch die Maschine angedeutet durch Pfeile) einem mit mehreren Vorpresswalzen ausgestatteten Einzugsaggregat 3 zu. Nach dortiger Vorpressung gelangt das Erntegut 20 zur Häckseltrommel 4, die das Erntegut 20 unter Zusammenwirkung mit einer feststehenden Gegenschneide (nicht bezeichnet) zerkleinert. Durch einen hinter der Häckseltrommel 4 aufsteigenden Förderschacht 7 tritt das gehäckselte Erntegut 20 nach Bearbeitung durch eine Konditioniereinrichtung 5 (optional) und zusätzlicher Beschleunigung durch einen Nachbeschleuniger 6 in eine bogenförmig gekrümmte Überladeeinrichtung 8 ein, um durch deren maschinenabgewandte Auswurfklappe 9 zur Beladung eines (nicht gezeigten) Sammelbehälters aus dem Feldhäcksler 1 ausgeworfen zu werden.

Das ausgeworfene Erntegut wird in der Praxis oftmals einem Silierprozess unterzogen, um es für eine spätere Verfütterung an Nutztiere zu konservieren und/oder allgemein zu veredeln. Zum Auslösen beziehungsweise zur effektiven Aufrechterhaltung des Silierprozesses und damit zum Erzielen eines guten Silierergebnisses sind bestimmte Eigenschaften des Ernteguts erforderlich, welche gewünschte biologische beziehungsweise chemische Vorgänge im Erntegut begünstigen. Da diese Eigenschaften nicht immer natürlich vorliegen, verfügt der erfindungsgemäße Feldhäcksler 1 über eine nachfolgend beschriebene Anlage zum Einbringen zumindest eines Hilfsmittels, das den Silierprozess und damit die Qualität des Ernteguts 20 begünstigt.

Hierzu ist am Feldhäcksler 1 ein Behältnis 21 in Form eines Tanks zur Aufnahme einer Flüssigkeit untergebracht. Das Behältnis 21 ist mit Waser 11 oder einer flüssigen Siliermittelmischung befüllbar, die beispielsweise Milchsäurebakterien enthält. Untenseitig des Behältnisses 21 ist eine Ablauföffnung vorgesehen, um das Behältnis 21 an ein Zuführsystem anzuschließen. Das Zuführsystem umfasst unter anderem Leitungen sowie eine Mischeinheit 13. Die Auslauföffnung wird mittels einer Leitung mit der Mischeinheit 13 verbunden. An der Leitung zwischen dem Behältnis 21 und der Mischeinheit 13 ist ein Durchflussmesser 24 vorgesehen, der den Durchfluss durch die Leitung und damit den Abfluss aus dem Behältnis 21 erfasst. Die Durchflussmesser 24 übermitteln entsprechende Durchflussmengensignale an eine zentrale Steuereinheit 16.

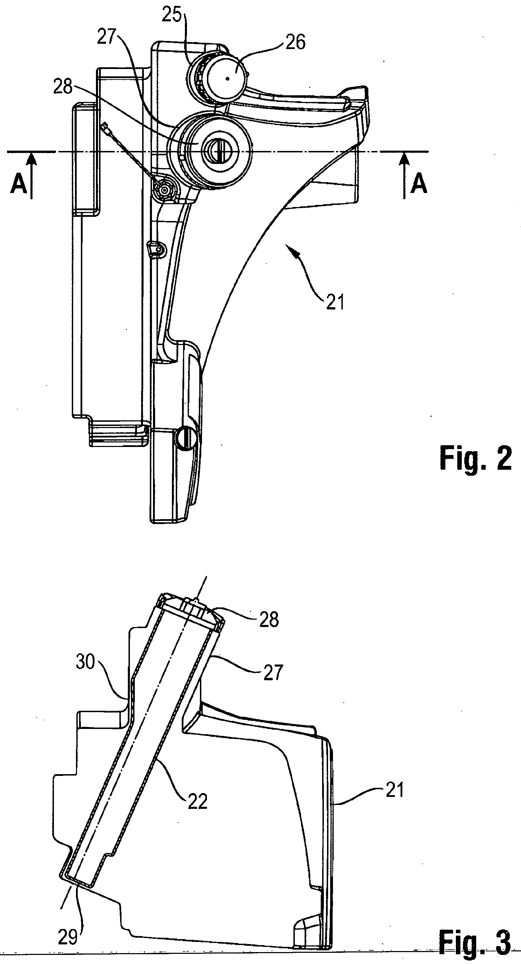

Die Darstellung in Fig. 2 zeigt eine Draufsicht auf das als Tank ausgeführte Behältnis 21, welches der Aufnahme eines Fluides wie reinem Wasser 11 oder einer Siliermittelmischung dient. Das Behältnis 21 weist auf seiner Oberseite einen Einfüllstutzen 25 auf, der durch einen Deckel 26 verschließbar ist. Des Weiteren weist das Behältnis 21 auf seiner Oberseite eine Öffnung auf, die im dargestellten Ausführungsbeispiel als ein Stutzen 27 ausgebildet ist, welcher ebenfalls durch einen Deckel 28 verschließbar ist. Durch diesen Stutzen 27 ist ein hohlzylindrisches Zusatzbehältnis 22 in das Behältnis 21 einbringbar, welches sich an den Wandungen des Behältnisses 21 abstützen kann, wie in Fig. 3, die eine Schnittansicht entlang der Linie A-A gemäß Fig. 2 darstellt, abgebildet ist. Hierzu weist das hohlzylindrische Zusatzbehältnis 22 zumindest teilweise an die äußere Kontur des Behältnisses 21 angepasste Abschnitte 29, 30 auf, mit denen sich das Zusatzbehältnis 22 im Inneren des Behältnisses 21 an dessen Wandungen anliegen kann. Das Zusatzbehältnis 22 weist an seinem dem Stutzen 27 zugewandten Ende ein Außengewinde auf, mit welchem das Zusatzbehältnis 22 in den Stutzen 27 einschraubbar ist.

Das Zusatzbehältnis 22 dient der Aufnahme von so genanntem ULV-Siliermittel 12 (Ultra Low Volume), also einem Siliermittel mit einer sehr hohen Konzentration der Wirkstoffe, welches dem im Behältnis 21 enthaltenen Wasser 11 oder der im Behältnis 21 enthaltenen Siliermittelmischung beigemengt wird. Hierzu ist das Zusatzbehältnis 22 über eine Leitung an die Mischeinheit 13 des Zuführsystems anschließbar. An der Leitung zwischen dem Zusatzbehältnis 22 und der Mischeinheit 13 ist ebenfalls ein Durchflussmesser 24' vorgesehen, welcher den Durchfluss durch die Leitung und damit den Abfluss des ULV-Siliermittels 12 aus dem Zusatzbehältnis 21 erfasst.

Die Mischeinheit 13 ist ebenfalls mit der zentralen Steuereinheit 16 signalverbunden, um von der Steuereinheit 16 angesteuert werden zu können. Auf Basis von der Steuereinheit 16 empfangener Steuersignale ist die Mischeinheit 13 in der Lage, die Ablaufmenge (=Durchflussmenge) des Wassers 11 sowie des in dem Zusatzbehältnis 22 enthaltenen ULV-Siliermittels 12 durch die Leitungen zur Mischeinheit 13 beliebig zu steuern.

Auf diese Weise kann die Mischeinheit 13 die Flüssigkeiten aus dem Behältnis 21 und dem Zusatzbehältnis 22 in beliebig einstellbarem Verhältnis mischen. Darüber hinaus erlaubt es die Steuereinheit, die Mischeinheit 13 derart anzusteuern, dass lediglich eine Flüssigkeit 11, 12 an die Förderpumpe 14 weitergeleitet wird, falls dieses sinnvoll ist. Auch eine vollständige Sperrung der Mischeinheit 13 ist möglich, falls aufgrund der Erntebedingungen keines der in dem Behältnis 21 oder dem mindestens einen Zusatzbehältnis 22 enthaltenen Hilfsmittel erforderlich ist.

Die Förderpumpe 14 mit veränderlicher Förderleistung ist über eine Leitung mit dem abgabeseitigen Auslass der Mischeinheit 13 verbunden, um das Flüssigkeitsgemisch gemäß an der Förderpumpe 14 angezeigter Pfeilrichtung zunächst durch einen weiteren Durchflussmesser 23 (für die Gesamtzugabemenge) und schließlich durch einen im Förderschacht 7 endenden, sich in Stromrichtung des Ernteguts 20 öffnenden Injektor 15 zu fördern, wodurch das Gemisch in fein verspritzter Form auf das vorbeiströmende Erntegut 20 appliziert wird. Alternativ oder zusätzlich kann die Applizierung der Flüssigkeit auf das Erntegut 20 im Bereich des Einzugsaggregates 3 erfolgen, wie in Fig. 1 angedeutet ist. Hierzu führt eine Leitung von der Förderpumpe 14 in Richtung des Einzugsaggregates 3, welche in einem Injektor 32 mündet. Der Förderpumpe 14 nachgeordnet sind ein Durchflussmesser 23' sowie ein Ventil 31, die beide mit der Steuereinheit 16 zwecks ihrer Ansteuerung in Verbindung stehen. Dadurch lässt sich das Ventil 31 zu- und abschalten, wenn eine zusätzliche Applizierung nur an einer Stelle vorgesehen ist. Grundsätzlich ist eine Applizierung der Flüssigkeit an einer oder mehreren unterschiedlichen Stellen entlang der Förderstrecke des Erntegutes20 möglich.

Auch die Förderpumpe 14 ist über die Steuereinheit 16 ansteuerbar, so dass sich die Gesamtzugabemenge des Flüssigkeitsgemischs, das durch den Injektor 15 dem Erntegut 20 zugeführt wird, durch Veränderung ihrer Förderleistung steuern lässt. Der Durchflussmesser 23, dessen Durchflussmengensignal an die Steuereinheit 16 übermittelt wird, dient als Rückkopplung für die Regelung der Gesamtmenge der auf das Erntegut 20 applizierten Flüssigkeit.

Zur selbsttätigen Einstellung einer effektiven Dosierung der zuzugebenden Hilfsmittel verfügt der Feldhäcksler 1 über eine Sensorik zur Erfassung von Eigenschaften des Ernteguts 20. Diese umfasst im dargestellten Ausführungsbeispiel gemäß Fig. 1 zwei Sensoren 17, 18, die an der Rückwand der Überladeeinrichtung 8 angeordnet sind.

Bei dem Sensor 17 handelt es sich um einen optischen Sensor, der dazu geeignet ist, vorbeiströmendes Erntegut 20 derart optisch zu erfassen, dass anhand einer Analyse der erzeugten optischen Signale Eigenschaften des Ernteguts 20 ermittelt werden können. Ganz allgemein kann es sich hierbei um Eigenschaften wie die Feuchte beziehungsweise Trockenmasse, den physikalischen Zustand (unter anderem Schnittlänge, Struktur des Erntegutes), die inhaltliche Zusammensetzung, etc. handeln. Insbesondere ein auf Basis der Nahinfrarotspektroskopie arbeitender optischer Sensor bietet auf technisch geeignete Weise die Möglichkeit, Inhaltsstoffe oder Feuchte des Ernteguts 20 zuverlässig zu bestimmen, was für eine besonders differenzierte Dosierung von Hilfsmitteln von Vorteil ist. Der Sensor 17 ist dazu mit der Steuereinheit 16 signalverbunden, so dass die Steuereinheit 16 auf aktuell vorliegende Eigenschaften des Ernteguts 20 durch entsprechende Dosierung des beziehungsweise der Hilfsmittel 11, 12 schnellstmöglich reagieren kann.

Bei dem optionalen Sensor 18 handelt es sich um eine zusätzliche Messeinrichtung in Form eines Feuchtesensors. Dieser kann beispielsweise gemäß dem Prinzip eines elektrischen Leitwertsensors arbeiten. Zusätzlich kann in diesen ein Temperatursensor integriert sein, um durch kombinierte Messwertanalyse (Leitfähigkeit und Temperatur des Ernteguts) die Genauigkeit der Feuchtemessung zu erhöhen. Auch der Sensor 18 ist mit der Steuereinheit 16 signalverbunden, so dass die Steuereinheit 16 auf ermittelte Feuchtewerte des Ernteguts 20 reagieren kann.

Der Feldhäcksler 1 verfügt weiterhin über eine Fahrerkabine 10, in der ein mit der Steuereinheit 16 in Kommunikationsverbindung stehendes Bedienterminal 19 für eine Bedienperson zugänglich angeordnet ist. Über das Bedienterminal 19 lassen sich sämtliche Einstellungen für die Siliermittelzugabe vornehmen. Insbesondere können gewünschte Applikationsmengen manuell eingestellt werden und/oder können Regelgrenzen für eine automatische Dosierung gesetzt werden. Vorteilhaft kann der Bediener dabei zwischen unterschiedlichen Erntegutarten auswählen, wobei mit der Auswahl einer Erntegutart die Hilfsmitteldosierung anhand einer für das Erntegut spezifischen in einer Datenbank hinterlegten Kennlinie erfolgt. Alternativ könnte in einem Vollautomatikmodus die Erntegutart beispielsweise mittels des optischen Sensors 17 des Sensors 18 selbständig erkannt werden, wodurch eine manuelle Auswahl entfiele.

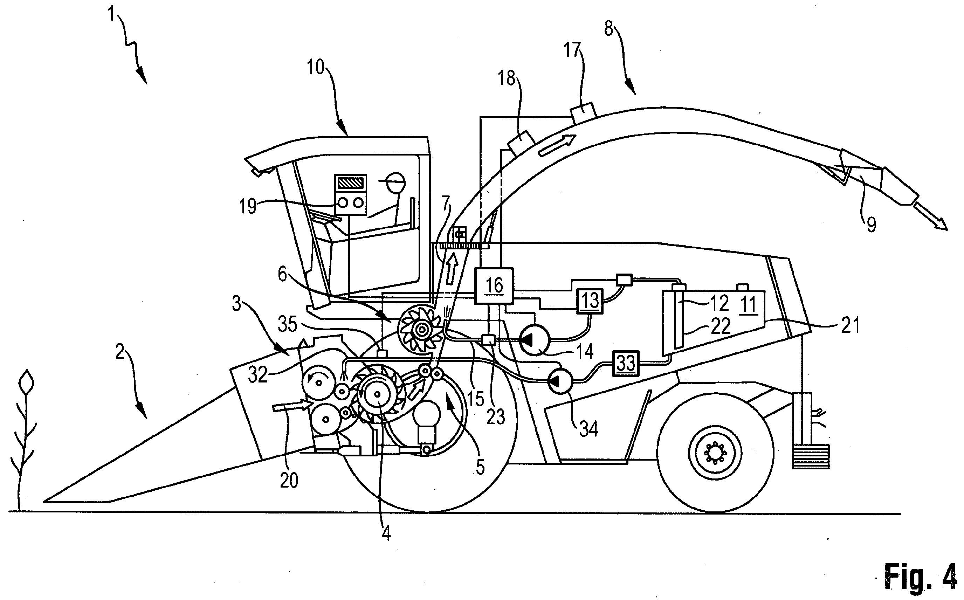

In Fig. 4 ist eine zweite Ausführungsform eines als Feldhäckslers ausgeführten landwirtschaftlichen Erntemaschine dargestellt. Bei dieser Ausführungsform sind für das Behältnis 21 und das Zusatzbehältnis 22 separate Zuführsysteme vorgesehen. So kann beispielsweise das Zusatzbehältnis 22, wie weiter oben beschrieben, durch eine die Mischeinheit 13, die dieser nachgeordneten Pumpe 14 sowie die Durchflussmesser 23 verbindende Leitung mit dem Injektor 15 verbunden sein, um die Flüssigkeit 12 durch den Injektor 15 auf des Erntegut 20 auszubringen. Das Behältnis 21 hingegen ist durch eine eine separate Mischeinheit 33, eine zusätzliche Förderpumpe 34 sowie einen weiteren Durchflussmesser 35 mit einem Injektor 32 verbindende Leitung verbunden, die ein weiteres Zuführsystem bilden, um die Flüssigkeit 11 des Behältnisses 21 auszubringen. Sowohl die Mischeinheit 33, die Förderpumpe 34 als auch der Durchflussmesser 35 sind mit der Steuereinheit 16 signalverbunden, um über diese ansteuerbar zu sein.

Erfindungsgemäß ist es vorgesehen, auch mehr als ein Zusatzbehältnis 22 über entsprechende zusätzliche Öffnungen in das Behältnis 21 einzubringen und über Leitungen an die Mischeinheit anzuschließen. Dies kann beispielsweis der Fall sein, wenn neben einem ULV-Siliermittel 12 bedarfsabhängig ein weiterer Zusatzstoff auf das Erntegut appliziert werden soll. Das Zusatzbehältnis 22, das in ein Behältnis 21 für Wasser 11 oder eine Siliermittelmischung einbringbar ist, ist nicht auf den Einsatz an einem Feldhäcksler beschränkt, sondern auch für den Einsatz an einem Mähdrescher, einer Ballenpresse oder einem Ladewagen geeignet, da auch hier Siliermittel zum Einsatz kommen.

**Bezugszeichenliste**

| | | | |
|---|---|---|---|
| 1 | Feldhäcksler | 30 | Abschnitt |
| 2 | Erntevorsatz | 31 | Ventil |
| 3 | Einzugsaggregat | 32 | Injektor |
| 4 | Häckseltrom mel | 33 | Mischeinheit |
| 5 | Konditioniereinrichtung | 34 | Förderpumpe |
| 6 | Nachbeschleuniger | 35 | Durchflussmesser |
| 7 | Förderschacht | | |
| 8 | Überladeeinrichtung | | |
| 9 | Auswurfklappe | | |
| 10 | Fahrerkabine | | |
| 11 | Silierhilfsmittel | | |
| 12 | Wasser | | |
| 13 | Mischeinheit | | |
| 14 | Förderpumpe | | |
| 15 | Injektor | | |
| 16 | Steuereinheit | | |
| 17 | optischer Sensor | | |
| 18 | Feuchtesensor | | |
| 19 | Bedienterminal | | |
| 20 | Erntegut | | |
| 21 | Behältnis | | |
| 22 | Zusatzbehältnis | | |
| 23 | Durchflussmesser | | |
| 23' | Durchflussmesser | | |
| 24 | Durchflussmesser | | |
| 24' | Durchflussmesser | | |
| 25 | Einfüllstutzen | | |
| 26 | Deckel | | |
| 27 | Stutzen | | |
| 28 | Deckel | | |
| 29 | Abschnitt | | |

## Patentansprüche

1. Erntemaschine (1) zur Aufnahme von Erntegut(20), mit einem einen verschließbaren Einfüllstutzen (25) aufweisenden Behältnis (21) zur Aufnahme eines Fluides (11, 12), welches von der Erntemaschine (1) aufgenommenem Erntegut (20) durch zumindest ein Zuführsystem zuführbar ist, **dadurch gekennzeichnet, dass** das Behältnis (21) zumindest eine weitere verschließbare Öffnung (27) aufweist, durch welche mindestens ein mit einem Fluid (11, 12) befüllbares Zusatzbehältnis (22) in das Behältnis (21) einbringbar ist, dessen Inhalt mit dem im Behältnis (21) befindlichen Fluid (11, 12) vermischbar ist.

2. Erntemaschine (1) nach Anspruch 1, **dadurch gekennzeichnet, dass** das mindestens eine Zusatzbehältnis (22) das Behältnis (21) nach außen dichtend abschließt.

3. Erntemaschine (1) nach einem der Ansprüche 1 oder 2, **dadurch gekennzeichnet, dass** das Zusatzbehältnis (22) an das mindestens eine Zuführsystem anschließbar ist.

4. Erntemaschine (1) nach einem der Ansprüche 1 bis 3, **dadurch gekennzeichnet, dass** das Zusatzbehältnis (22) als ein zylindrischer Hohlkörper ausgeführt ist.

5. Erntemaschine (1) nach einem der Ansprüche 1 bis 4, **dadurch gekennzeichnet, dass** das Zusatzbehältnis (22) einen Füllstandsensor umfasst.

6. Erntemaschine (1) nach einem der Ansprüche 1 bis 5, **dadurch gekennzeichnet, dass** im Inneren des Behältnisses (21) unterhalb der Öffnung (27) ausgehend von dieser eine Aufnahmevorrichtung angeordnet ist.

7. Erntemaschine (1) nach Anspruch 6, **dadurch gekennzeichnet, dass** die Aufnahmevorrichtung im Inneren des Behältnisses (21) an diesem angeformt ist.

8. Erntemaschine (1) nach Anspruch 6, **dadurch gekennzeichnet, dass** die Aufnahmevorrichtung durch die Öffnung (27) in das Behältnis (21) einbringbar ist.

9. Erntemaschine (1) nach einem der Ansprüche 7 oder 8, **dadurch gekennzeichnet, dass** die Aufnahmevorrichtung das von dieser aufgenommenen Zusatzbehältnis (22) zumindest abschnittsweise umschließt.

10. Erntemaschine (1) nach einem der Ansprüche 1 bis 9, **dadurch gekennzeichnet, dass** die Erntemaschine als ein selbstfahrender Feldhäcksler (1) ausgeführt ist.

11. Erntemaschine (1) nach einem der Ansprüche 1 bis 9, **dadurch gekennzeichnet, dass** die Erntemaschine als ein selbstfahrender Mähdrescher ausgeführt ist.

12. Erntemaschine (1) nach einem der Ansprüche 1 bis 9, **dadurch gekennzeichnet, dass** die Erntemaschine (1) als eine Ballenpresse ausgeführt ist.

13. Erntemaschine (1) nach einem der Ansprüche 1 bis 9, **dadurch gekennzeichnet, dass** die Erntemaschine (1) als Ladewagen ausgeführt ist.

## Claims

1. A harvesting machine (1) for picking up crop material (20) comprising a container (21) having a closable filler connection (25) for receiving a fluid (11, 12) which can be supplied by at least one supply system to crop material (20) picked up by the harvesting machine (1), **characterised in that** the container (21) has at least one further closable opening (27) through which at least one additional container (22) which can be filled with a fluid (11, 12) can be introduced into the container (21), the content of which can be mixed with the fluid (11, 12) in the container (21).

2. A harvesting machine (1) according to claim 1 **characterised in that** the at least one additional container (22) closes the container (21) in outwardly sealing relationship.

3. A harvesting machine (1) according to one of claims 1 and 2 **characterised in that** the additional container (22) can be connected to the at least one supply system.

4. A harvesting machine (1) according to one of claims 1 to 3 **characterised in that** the additional container (22) is in the form of a cylindrical hollow body.

5. A harvesting machine (1) according to one of claims 1 to 4 **characterised in that** the additional container (22) includes a filling level sensor.

6. A harvesting machine (1) according to one of claims 1 to 5 **characterised in that** a receiving device is arranged in the interior of the container (21) beneath the opening (27) and extending therefrom.

7. A harvesting machine (1) according to claim 6 **characterised in that** the receiving device in the interior of the container (21) is formed thereon.

8. A harvesting machine (1) according to claim 6 **characterised in that** the receiving device can be introduced into the container (21) through the opening (27).

9. A harvesting machine (1) according to one of claims 7 and 8 **characterised in that** the receiving device at least portion-wise encloses the additional container (22) received by same.

10. A harvesting machine (1) according to one of claims 1 to 9 **characterised in that** the harvesting machine is in the form of a self-propelled forage harvester (1).

11. A harvesting machine (1) according to one of claims 1 to 9 **characterised in that** the harvesting machine is in the form of a self-propelled combine harvester.

12. A harvesting machine (1) according to one of claims 1 to 9 **characterised in that** the harvesting machine (1) is in the form of a bale press.

13. A harvesting machine (1) according to one of claims 1 to 9 **characterised in that** the harvesting machine (1) is in the form of a loading wagon.

## Revendications

1. Machine de récolte (1) pour ramasser du produit de récolte (20), comprenant un contenant (21) muni d'une tubulure de remplissage obturable (25) pour recevoir un fluide (11, 12), lequel peut être amené par l'intermédiaire d'au moins un système d'amenée au produit de récolte (20) ramassé par la machine de récolte (1), **caractérisée en ce que** le contenant (21) comporte au moins une autre ouverture obturable (27) à travers laquelle peut être introduit dans le contenant (21) au moins un contenant supplémentaire (22) qui peut être rempli avec un fluide (11, 12) et dont le contenu peut être mélangé au fluide (11, 12) se trouvant dans le contenant (21).

2. Machine de récolte (1) selon la revendication 1, **caractérisée en ce que** le au moins un contenant supplémentaire (22) ferme le contenant (21) vers l'extérieur de manière étanche.

3. Machine de récolte (1) selon une des revendications 1 ou 2, **caractérisée en ce que** le contenant supplémentaire (22) peut être relié au au moins un système d'amenée.

4. Machine de récolte (1) selon une des revendications 1 à 3, **caractérisée en ce que** le contenant supplémentaire (22) est conformé en corps creux cylindrique.

5. Machine de récolte (1) selon une des revendications 1 à 4, **caractérisée en ce que** le contenant supplémentaire (22) comprend un capteur de niveau de remplissage.

6. Machine de récolte (1) selon une des revendications 1 à 5, **caractérisée en ce qu'**un dispositif récepteur est disposé à l'intérieur du contenant (21), sous l'ouverture (27), à partir de celle-ci.

7. Machine de récolte (1) selon la revendication 6, **caractérisée en ce que** le dispositif récepteur est moulé à l'intérieur du contenant (21) sur celui-ci.

8. Machine de récolte (1) selon la revendication 6, **caractérisée en ce que** le dispositif récepteur peut être introduit dans le contenant (21) à travers l'ouverture (27).

9. Machine de récolte (1) selon une des revendications 7 ou 8, **caractérisée en ce que** le dispositif récepteur entoure au moins par endroits le contenant supplémentaire (22) qu'il reçoit.

10. Machine de récolte (1) selon une des revendications 1 à 9, **caractérisée en ce que** la machine de récolte est conformée en ensileuse automotrice (1).

11. Machine de récolte (1) selon une des revendications 1 à 9, **caractérisée en ce que** la machine de récolte est conformée en moissonneuse-batteuse automotrice.

12. Machine de récolte (1) selon une des revendications 1 à 9, **caractérisée en ce que** la machine de récolte (1) est conformée en presse à balles.

13. Machine de récolte (1) selon une des revendications 1 à 9, **caractérisée en ce que** la machine de récolte (1) est conformée en remorque autochargeuse.
